# EUROPÄISCHE PATENTSCHRIFT

(11) **EP 0 642 537 B1**
(45) Veröffentlichungstag und Bekanntmachung des Hinweises auf die Patenterteilung: **12.03.1997**
(21) Anmeldenummer: 93909930.5
(22) Anmeldetag: 10.05.1993
(51) Int. Cl.: C08F 4/646, C08F 10/00

(54) **ZIEGLER-NATTA-KATALYSATORSYSTEME MIT SPEZIELLEN SILICIUMORGANISCHEN VERBINDUNGEN**
ZIEGLER-NATTA CATALYST SYSTEM WITH SPECIAL SILICON-ORGANIC COMPOUNDS
SYSTEMES CATALYSEURS ZIEGLER-NATTA A TENEUR EN COMPOSES ORGANOSILICIQUES SPECIAUX

(30) Priorität: 19.05.1992 DE 4216548
(43) Veröffentlichungstag der Anmeldung: 15.03.1995
(73) Patentinhaber: BASF Aktiengesellschaft, 67063 Ludwigshafen (DE)
(72) Erfinder: MUELLER, Patrik, D-6750 Kaiserlautern (DE); HUNGENBERG, Klaus-Dieter, D-6943 Birkenau (DE); KERTH, Juergen, D-6719 Carlsberg (DE); ZOLK, Ralf, D-6714 Weisenheim (DE)
(86) Internationale Anmeldenummer: EP9301137
(87) Internationale Veröffentlichungsnummer: WO9323440

(56) Entgegenhaltungen:
- EP-A- 0 261 961
- EP-A- 0 282 341
- EP-A- 0 445 302
- EP-A- 0 530 814

## Beschreibung

Die vorliegende Erfindung betrifft neue Katalysatorsysteme vom Typ der Ziegler-Natta-Katalysatoren, enthaltend als aktive Bestandteile
a) eine titanhaltige Feststoffkomponente, bei deren Herstellung eine Titanverbindung, eine Verbindung des Magnesiums, ein Halogenierungsmittel und eine Elektronendonorkomponente verwendet werden,
b) eine Aluminiumverbindung und
c) als weitere Elektronendonorkomponente eine siliciumorganische Verbindung der allgemeinen Formel (I)

   R¹R²Si(OR³)₂ (I)

   wobei
   - R¹: für einen C₁-C₁₀-Alkylrest oder einen C₃-C₈-Cycloalkylrest steht, wobei der sek. Butylrest ausgeschlossen ist,
   - R²: einen sek. Butylrest bedeutet und
   - R³: für einen C₁-C₈-Alkylrest steht.

Außerdem betrifft die Erfindung die Herstellung von Polymerisaten von C₂-C₁₀-Alk-1-enen mit Hilfe dieser Katalysatorsysteme, die hiernach erhältlichen Polymerisate sowie Folien und Formkörper aus diesen Polymerisaten.

Katalysatorsysteme vom Typ der Ziegler-Natta-Katalysatoren sind u.a. aus der EP-B 14523, der EP-A-23425, der EP-A 45 975, der EP-A 195 497, der EP-A 250 229 und der US-A 4,857,613 bekannt. Diese Systeme werden insbesondere zur Polymerisation von Alk-1-enen verwendet und enthalten u.a. Verbindungen des mehrwertigen Titans, Aluminiumhalogenide und/oder -alkyle, sowie Elektronendonorverbindungen, beispielsweise Siliciumverbindungen, Ether, Carbonsäureester, Ketone und Lactone, die einerseits in Verbindung mit der Titanverbindung und andererseits als Cokatalysator verwendet werden.

Um eine wirtschaftliche Polyalk-1-enproduktion zu gewährleisten, müssen solche Katalysatorsysteme u.a. eine hohe Produktivität aufweisen. Darunter versteht man das Verhältnis der gebildeten Menge Polymerisat zur Menge des eingesetzten Katalysators. Weiterhin ist es erforderlich, daß die dabei erhältlichen Polymerisate möglichst stereospezifisch ausgerichtet sind, d.h. der Anteil nichtisotaktischer Molekülstrukturen in Homopolymerisaten sollte 2,0 bis 3,0 % nicht übersteigen.

Diese beiden Zielvorgaben lassen sich nach dem Stand der Technik zusammen nur bedingt verwirklichen. So ist beispielsweise aus der EP-A 86 473 ein Katalysatorsystem bekannt, bei dem als Elektronendonorverbindungen innerhalb der titanhaltigen Feststoffkomponente Carbonsäureester und als weitere Elektronendonorverbindungen allgemein organische Siliciumverbindungen verwendet werden, das zwar eine befriedigend hohe Produktivität aufweist, im Hinblick auf die Stereospezifität der entstehenden Polymerisate aber zu wünschen übrig läßt. In der EP-A 171 200 wird ferner ein Ziegler-Natta-Katalysatorsystem beschrieben, das als Bestandteile der titanhaltigen Feststoffkomponente u.a. Carbonsäureester und als weitere Elektronendonorverbindungen allgemein organische Siliciumverbindungen aufweist. Diese Katalysatorsysteme ermöglichen u.a. die Herstellung von Polypropylen mit hoher Stereospezifität, weisen aber keine befriedigend hohe Produktivität auf.

Weiterhin sind aus der EP-A 288 845 und der älteren Anmeldung EP-A 445 302 Ziegler-Natta-Katalysatorsysteme bekannt, die neben einer titanhaltigen Feststoffkomponente noch eine Aluminiumkomponente und organische Siliciumverbindungen als externe Elektronendonorverbindungen aufweisen. Die darin beschriebenen Katalysatorsysteme zeichnen sich u.a. durch eine hohe Produktivität aus.

Neben diesen, insbesondere für die Verarbeitung der Polymerisate wichtigen Eigenschaften ist auch ein niedriger Halogengehalt im Polyalk-1-en von Bedeutung, um die Verwendung derartiger Materialien in Verbindung mit korrosionsgefährdeten Stoffen zu ermöglichen. Dazu ist es vor allem notwendig, den Halogengehalt im Polymerisat deutlich zu reduzieren. Weiterhin ist es aus verarbeitungstechnischen Gründen wichtig, daß Polyalk-1-ene gute morphologische Eigenschaften, insbesondere einen möglichst geringen Feinstkornanteil aufweisen.

Der vorliegenden Erfindung lag als Aufgabe die Entwicklung eines verbesserten Katalysatorsystems zugrunde, mit dem den geschilderten Nachteilen weitgehend abgeholfen werden kann und mit dem es möglich ist, Polymerisate von C₂-C₁₀-Alk-1-enen mit hoher Produktivität herzustellen, die sich durch eine hohe Stereospezifität, gute morphologische Eigenschaften und einem möglichst niedrigen Halogengehalt auszeichnen.

Demgemäß wurden die in den Patentansprüchen angeführten neuen Katalysatorsysteme gefunden.

Zur Herstellung der titanhaltigen Feststoffkomponente a) werden als Titanverbindungen im allgemeinen Halogenide oder Alkoholate des drei- oder vierwertigen Titans verwendet, wobei die Chloride des Titans, insbesondere Titantetrachlorid, bevorzugt sind. Vorteilhaft enthält die titanhaltige Feststoffkomponente einen feinteiligen Träger, wofür sich Silicium- und Aluminiumoxide, sowie Aluminiumsilicate der Bruttoformel SiO₂·aAl₂O₃, wobei a für einen Wert von 0,001 bis 2, insbesondere von 0,01 bis 0,5 steht, gut bewährt haben.

Die bevorzugt verwendeten Träger weisen einen Teilchendurchmesser von 0,1 bis 1000 µm, insbesondere von 10 bis 300 µm, ein Porenvolumen von 0,1 bis 10 cm3/g, insbesondere von 1,0 bis 5,0 cm3/g und eine spezifische Oberfläche von 10 bis 1000 m2/g, insbesondere von 100 bis 500 m2/g auf.

Weiter werden bei der Herstellung der titanhaltigen Feststoffkomponente a) u.a. Verbindung des Magnesiums eingesetzt. Als solche kommen Magnesiumhalogenide, Magnesiumaryle, Magnesiumalkyle und Magnesiumalkoxy-, sowie Magnesiumaryloxyverbindungen in Betracht, wobei insbesondere Magnesiumdichlorid, Magnesiumdibromid und Magnesiumdi-(C1-C10-alkyl)-Verbindungen verwendet werden. Daneben wird bei der Herstellung dieser Komponente noch ein Halogenierungsmittel, bevorzugt Chlor, Chlorwasserstoff, Brom oder Bromwasserstoff, verwendet.

Neben den drei- oder vierwertigen Titanverbindungen, sowie gegebenenfalls dem Träger, der Magnesiumverbindung und dem Halogenierungsmittel werden bei der Herstellung der titanhaltigen Feststoffkomponente a) noch Elektronendonorkomponenten eingesetzt, beispielsweise mono- oder polyfunktionelle Carbonsäuren, Carbonsäureanhydride und Carbonsäureester, Ketone, Ether, Alkohole, Lactone, sowie phosphor- und siliciumorganische Verbindungen.

Bevorzugte Elektronendonorkomponenten innerhalb der titanhaltigen Feststoffkomponente a) sind u.a. Diester von 3- oder 4-gliedrigen, gegebenenfalls substituierten Cycloalkyl-1,2-dicarbonsäuren, sowie Monoester von, gegebenenfalls substituierten Benzophenon-2-carbonsäuren. Als Hydroxyverbindungen werden bei diesen Estern die bei Veresterungsreaktionen üblichen Alkohole verwendet, u.a. C₁- bis C₁₅-Alkanole, C₅- bis C₇-Cycloalkanole, die ihrerseits C₁- bis C₁₀-Alkylgruppen tragen können, ferner C₆- bis C₁₀-Phenole.

Als weitere bevorzugte Elektronendonorkomponenten innerhalb der titanhaltigen Feststoffkomponente werden u.a. Phthalsäurederivate der allgemeinen Formel II 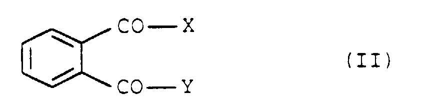 verwendet, wobei X und Y jeweils für Chlor oder einen C₁- bis C₁₀-, insbesondere für einen C₁- bis C₄-Alkoxyrest oder gemeinsam für Sauerstoff stehen.

Die titanhaltige Feststoffkomponente kann nach an sich bekannten Methoden hergestellt werden. Beispiele dafür sind u.a. in der EP-A 45 975, der EP-A 45 977, der EP-A 86 473, der EP-A 171 200, der GB-A 2 111 066 und der US-A 4,857,613 beschrieben.

Bei der Herstellung der titanhaltigen Feststoffkomponente a) wird bevorzugt folgendes dreistufige Verfahren angewandt.

In der ersten Stufe versetzt man zunachst einen feinteiligen Träger, bevorzugt Siliciumoxid oder SiO₂·aAl₂O₃ - wobei a für eine Zahl im Bereich von 0,001 und 2, insbesondere im Bereich von 0,01 und 0,5 steht -, mit einer Lösung einer magnesiumhaltigen Verbindung in einem flüssigen Alkan, wonach man dieses Gemisch 0,5 bis 5 Stunden lang bei einer Temperatur zwischen 10 und 120°C rührt. Vorzugsweise setzt man pro Mol des Trägers 0,1 bis 1 mol der Magnesiumverbindung ein. Anschließend gibt man unter ständigem Rühren ein Halogen oder einen Halogenwasserstoff, insbesondere Chlor oder Chlorwasserstoff im wenigstens zweifachen, bevorzugt im wenigstens fünffachen molaren Überschuß, bezogen auf die magnesiumhaltige Verbindung, hinzu.

Danach fügt man ein C₁- bis C₈-Alkanol, insbesondere Ethanol, ein Halogenid oder ein Alkohoiat des drei- oder vierwertigen Titans, insbesondere Titantetrachlorid, sowie eine Elektronendonorverbindung, insbesondere ein Phthalsäurederivat der allgemeinen Formel (II) hinzu. Dabei setzt man pro Mol Magnesium des aus der ersten Stufe erhaltenen Feststoffs 1 bis 5 mol, insbesondere 2 bis 4 mol, Alkanol, 2 bis 20 mol, insbesondere 4 bis 10 mol, des drei- oder vierwertigen Titans und 0,01 bis 1 mol, insbesondere 0,1 bis 1,0 mol, der Elektronendonorverbindung ein. Die Lösung wird bei einer Temperatur zwischen 10 und 150°C gerührt, der so erhaltene feste Stoff anschließend abfiltriert und mit einem flüssigen Alkan, bevorzugt mit Hexan oder Heptan, gewaschen.

Als Aluminiumkomponente b) kommen dabei neben Trialkylaluminiumverbindungen, deren Substituenten jeweils 1 bis 8 C-Atome aufweisen, auch solche Verbindungen in Betracht, bei denen ein Alkylsubstituent durch eine Alkoxygruppe oder durch ein Halogenatom, beispielsweise durch ein Chlor- oder ein Bromatom, ersetzt ist. Bevorzugt werden Trialkylaluminiumverbindungen verwendet, deren Alkylgruppen jeweils 1 - 8 C-Atome aufweisen, beispielsweise Trimethyl-, Triethyl- oder Methyldiethylaluminium.

Erfindungsgemäß wird als weitere Elektronendonorkomponente c) eine siliciumorganische Verbindung der allgemeinen Formel (I)

R¹R²Si(OR³)₂ (I)

verwendet, wobei
- R¹: für einen C₁-C₁₀-Alkylrest oder einen C₃-C₈-Cycloalkylrest steht, wobei der sek. Butylrest ausgeschlossen ist,
- R²: einen sek. Butylrest bedeutet und
- R³: für einen C₁-C₈-Alkylrest steht.

Bevorzugt werden dabei solche siliciumorganischen Verbindungen der allgemeinen Formel (I) eingesetzt, bei denen R¹ für einen verzweigten C₃-C₈-Alkylrest, insbesondere für einen verzweigten C₃-C₆-Alkylrest steht und R³ einen C₁-C₆-Alkylrest, insbesondere einen C₁-C₄-Alkylrest bedeutet. Besonders bevorzugte siliciumorganische Verbindungen enthalten für R¹ einen Isobutyl- oder einen Isopropylrest.

Unter diesen Verbindungen sind insbesondere Dimethoxyisobutylsek.butylsilan, Diethoxyisobutylsek,butylsilan, Diisopropyloxyisobutylsek.butylsilan, Diisobutyloxyisobutylsek.butylsilan, Dimethoxyisopropylsek.butylsilan und Diethoxyisopropylsek.butylsilan hervorzuheben.

Bevorzugt werden solche Katalysatorsysteme verwendet, bei denen das Atomverhältnis zwischen Aluminium aus der Aluminiumverbindung b) und Titan aus der titanhaltigen Feststoffkomponente a) 10 : 1 bis 800 : 1, insbesondere 20 : 1 bis 200 : 1, und das Molverhältnis zwischen der Aluminiumverbindung b) und der erfindungsgemäß eingesetzten Elektronendonorverbindung c) 1 : 1 bis 100 : 1, insbesondere 2 : 1 bis 80 : 1 beträgt. Die Katalysatorbestandteile können in beliebiger Reihenfolge einzeln oder als Gemisch der Komponenten in das Polymerisationssystem eingebracht werden.

Das erfindungsgemäße Katalysatorsystem eignen sich besonders zur Polymerisation von C₂-C₁₀-Alk-1-enen. Unter C₂-C₁₀-Alk-1-enen werden in diesem Zusammenhang insbesondere Ethylen, Propylen, But-1-en, Pent-1-en, Hex-1-en, Hept-1-en oder Oct-1-en oder Gemische aus diesen C₂-C₁₀-Alk-1-enen verstanden, wobei als Monomere vorzugsweise Propylen oder But-1-en verwendet werden. Das erfindungsgemäße Katalysatorsystem ist für die Homopolymerisation von Propylen oder die Copolymerisation von Propylen mit untergeordneten Anteilen von Ethylen, But-1-en, Pent-1-en, Hex-1-en oder Gemischen aus diesen Monomeren besonders gut geeignet.

Die Herstellung von Polymerisaten aus C₂-C₁₀-Alk-1-enen mit Hilfe des erfindungsgemäßen Katalysatorsystems kann in den üblichen, für die Polymerisation von Propylen verwendeten Reaktoren entweder absatzweise oder bevorzugt kontinuierlich u.a. als Suspensionspolymerisation oder bevorzugt als Gasphasenpolymerisation, durchgeführt werden. Geeignete Reaktoren sind u.a. kontinuierlich betriebene Rührreaktoren, die ein Festbett aus feinteiligem Polymerisat enthalten, welches üblicherweise durch geeignete Rührvorrichtungen in Bewegung gehalten wird. Selbstverständlich kann die Reaktion auch in einer Reihe von mehreren, hintereinander geschalteten Reaktoren durchgeführt werden.

Die Polymerisationsreaktion wird zweckmäßigerweise bei Temperaturen von 20 bis 150°C und Drücken von 1 bis 100 bar durchgeführt. Bevorzugt sind dabei Temperaturen von 40 bis 100°C und Drücke von 10 bis 50 bar. Die mittleren Verweilzeiten des Reaktionsgemisches liegen bei der Polymerisation mit Hilfe des erfindungsgemäßen Katalysatorsystems üblicherweise im Bereich von 1 bis 10 Stunden, insbesondere im Bereich von 1 bis 5 Stunden. Die Molmasse der dabei gebildeten Polyalk-1-ene kann durch Zugabe von in der Polymerisationstechnik gebräuchlichen Reglern, beispielsweise von Wasserstoff, kontrolliert werden. Weiterhin ist es möglich, inerte Lösungsmittel wie beispielsweise Toluol oder Hexan, oder Inertgase wie Stickstoff oder Argon mitzuverwenden.

Die mittleren Molmassen der mit Hilfe des erfindungsgemäßen Katalysatorsystems hergestellten Polymerisate liegen zwischen 10 000 und 1 000 000, die Schmelzflußindices zwischen 0,1 bis 100 g/10 min, vorzugsweise zwischen 0,2 bis 50 g/10 min, jeweils gemessen nach DIN 53735 bie 230°C und 2,16 kg. Der Schmelzflußindex entspricht dabei der Menge an Polymerisat, die innerhalb von 10 Minuten aus der nach DIN 53 735 genormten Prüfvorrichtung bei einer Temperatur von 230°C und unter eine Gewicht von 2,16 kg auggepreßt wird.

Das erfindungsgemaße Katalysatorsystem zeichnet sich durch eine hohe Produktivität, insbesondere bei Gasphasenpolymerisationen aus. Die auf diese Weise zugänglichen Polymerisate weisen eine hohe Stereospezifität, einen niedrigen Chlorgehalt und einen sehr geringen Feinstkornanteil (< 0,25 mm) auf. Die mit diesem Katalysatorsystem hergestellten Polymerisate eignen sich vor allem für die Herstellung von Folien und Formkörpern.

### Beispiele

### Beispiel 1

a) Herstellung der titanhaltigen Feststoffkomponente (1)
   In einer ersten Stufe wurde SiO₂, das einen Teilchendurchmesser von 20 bis 45 mm, ein Porenvolumen von 1,7 cm³/g und eine spezifische Oberfläche von 330 m²/g aufwies, mit einer Lösung von n-Butyloctylmagnesium in n-Heptan versetzt, wobei pro Mol SiO₂ 0,3 mol der Magnesiumverbindung eingesetzt wurden. Die Lösung wurde 30 Minuten bei 40°C gerührt, danach auf 20°C abgekühlt, wonach die 10-fache molare Menge, bezogen auf die magnesiumorganische Verbindung, an Chlorwasserstoff eingeleitet wurde. Nach 60 Minuten wurde das Reaktionsprodukt unter ständigem Rühren mit 3 mol Ethanol pro Mol Magnesium versetzt. Dieses Gemisch wurde 30 Minuten bei 80°C gerührt und anschließend mit 7,2 mol Titantetrachlorid und 0,5 mol von in Ethylbenzol gelöstem Phthalsäuredi-n-butylester, jeweils bezogen auf 1 Mol Magnesium, versetzt. Anschließend wurde 1 Stunde bei 100°C gerührt, der so erhaltene feste Stoff abfiltriert und mehrmals mit Ethylbenzol gewaschen.
   Das daraus erhaltene Festprodukt extrahierte man 3 Stunden lang bei 125°C mit einer 10 vol.-%igen Lösung von Titantetrachlorid in Ethylbenzol. Danach wurde das Festprodukt durch Filtration vom Extraktionsmittel getrennt und solange mit n-Heptan gewaschen, bis das Extraktionsmittel nur noch 0,3 Gew.-% Titantetrachlorid aufwies.
   Die titanhaltige Feststoffkomponente enthielt
   3,6 Gew.-% Ti
   7,7 Gew.-% Mg
   27,9 Gew.-% Cl.
b) Polymerisation
   In einem mit einem Rührer versehenen 10 1-Stahlautoklaven wurden bei 30°C 50 g Polypropylenpulver (Schmelzflußindex: 10 g/10 min, bei 230°C und 2,16 kg, nach DIN 53735), 10 mmol Triethylaluminium (in Form einer 1-molaren Lösung in n-Heptan), 10 l Wasserstoff, 93,2 mg der gemäß Beispiel la) hergestellten titanhaltigen Feststoffkomponente und 1 mmol Dimethoxyisobutylsek.butylsilan vorgelegt. Das Molverhältnis zwischen der Aluminiumkomponente und der erfindungsgemäß eingesetzten organischen Siliciumverbindung betrug dabei 10:1. Anschließend wurde die Reaktortemperatur innerhalb von 10 Minuten auf 70°C erhöht, der Reaktordruck durch Aufpressen von gasförmigem Propylen auf 28 bar gebracht, wonach bei einer mittleren Verweilzeit des Reaktionsgemisches von 1,5 Stunden polymerisiert wurde. Hierbei wurde das verbrauchte Monomere kontinuierlich durch neues ersetzt.
   Dabei erhielt man 1430 g eines Propylenhomopolymerisats mit einem Schmelzflußindex von 11,3 g/10 min. bei 230°C und 2,16 kg (nach DIN 53 735). Die Produktivität des Katalysatorsystems, die als das Verhältnis der Menge an gebildetem Polymerisat zur Menge der titanhaltigen Feststoffkomponente definiert wird, der heptanlösliche Anteil, der eine Maßzahl für den Anteil an nichtisotaktischen Struktureinheiten darstellt, der Feinstkornanteil (< 0,25 mm) und der Chlorgehalt des Polymerisats sind in der nachstehenden Tabelle zusammengestellt.

### Beispiel 2

Mit dem gleichen Katalysatorsystem und unter den Reaktionsbedingungen wie im Beispiel 1 beschrieben, wurde Propylen polymerisiert, wobei die Reaktion anstelle von 28 bar und 70°C bei 37 bar und 80°C in einer Suspension durchgeführt wurde.

### Beispiel 3

Mit dem gleichen Katalysatorsystem und unter den Reaktionsbedingungen wie im Beispiel 1 beschrieben, wurde Propylen polymerisiert, wobei als weitere Elektronendonorkomponente c) anstelle von 1 mmol Dimethoxyisobutylsek.butylsilan 1 mmol Dimethoxyisopropylsek.butylsilan verwendet wurde.

Dabei erhielt man 1435 g eines Propylenhomopolymerisats mit einem Schmelzflußindex von 12,8 g/10 min, bei 230°C und 2,16 kg (nach DIN 53 735). Die weiteren Ergebnisse sind in der nachstehenden Tabelle wiedergegeben.

**Tabelle**

| | Beispiel 1 | Beispiel 2 | Beispiel 3 |
|---|---|---|---|
| Produktivität (g Polypropylen/g titanhaltige Feststoffkomponente) | 15340 | 20200 | 15400 |
| heptanlösliche Anteile (Gew.-%) | 2,2 | 1,7 | 2,1 |
| Feinstkornanteil < 0,25 mm (in %) | 1,0 | 0,5 | 0,8 |
| Chlorgehalt im Polymerisat (ppm) | 18 | 14 | 18 |

## Patentansprüche

1. Katalysatorsysteme vom Typ der Ziegler-Natta-Katalysatoren, enthaltend als aktive Bestandteile
a) eine titanhaltige Feststoffkomponente, bei deren Herstellung eine Titanverbindung, eine Verbindung des Magnesiums, ein Halogenierungsmittel und eine Elektronendonorkomponente verwendet werden,
b) eine Aluminiumverbindung und
c) als weitere Elektronendonorkomponente eine siliciumorganische Verbindung der allgemeinen Formel (I)
R¹R²Si(OR³)₂ (I)
wobei
R¹ für einen C₁-C₁₀-Alkylrest oder einen C₃-C₈-Cycloalkylrest steht, wobei der sek. Butylrest ausgeschlossen ist,
R² einen sek. Butylrest bedeutet und
R³ für einen C₁-C₈-Alkylrest steht.

2. Katalysatorsysteme nach Anspruch 1, in deren siliciumorganischer Verbindung c) R¹ für einen verzweigten C₃-C₈-Alkylrest und R³ für einen C₁-C₆-Alkylrest steht.

3. Katalysatorsysteme nach den Ansprüchen 1 oder 2, in deren siliciumorganischer Verbindung c) R¹ für einen verzweigten C₃-C₆-Alkylrest und R³ für einen C₁-C₄-Alkylrest steht.

4. Katalysatorsysteme nach den Ansprüchen 1 bis 3, in deren siliciumorganischer Verbindung c) R¹ für einen Isobutyl- oder einen Isopropylrest steht.

5. Katalysatorsysteme nach den Ansprüchen 1 bis 4, wobei die titanhaltige Feststoffkomponente a) einen feinteiligen Träger enthält.

6. Katalysatorsysteme nach den Ansprüchen 1 bis 5, wobei als Elektronendonorkomponente innerhalb der titanhaltigen Feststoffkomponente a) Phthalsäurederivate der allgemeinen Formel (II) 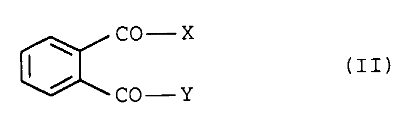 verwendet werden, wobei X und Y jeweils für Chlor oder einen C₁-C₁₀-Alkoxyrest oder gemeinsam für Sauerstoff stehen.

7. Katalysatorsysteme nach den Ansprüchen 1 bis 6, wobei als Aluminiumkomponente b) Trialkylaluminiumverbindungen verwendet werden, deren Substituenten jeweils 1 bis 8 C-Atome aufweisen.

8. Verfahren zur Herstellung von Polymerisaten von C₂-C₁₀-Alk-1-enen durch Polymerisation bei Temperaturen von 20 bis 150°C, Drücken von 1 bis 100 bar und mittleren Verweilzeiten des Reaktionsgemisches von 1 bis 10 Stunden mit Hilfe eines Ziegler-Natta-Katalysatorsystems, dadurch gekennzeichnet, daß man hierzu ein Katalysatorsystem gemäß den Ansprüchen 1 bis 7 verwendet.

## Claims

1. A catalyst system of the Ziegler-Natta type, containing, as active components,
a) a titanium-containing solid component in whose preparation a titanium compound, a compound of magnesium, a halogenating agent and an electron donor component are used,
b) an aluminum compound and
c) as a further electron donor component, an organosilicon compound of the formula (I)
R¹R²Si(OR³)₂ (I)
where R¹ is C₁-C₁₀-alkyl or C₃-C₈-cycloalkyl, excluding sec-butyl, R² is sec-butyl and R³ is C₁-C₈-alkyl.

2. A catalyst system as claimed in claim 1, in whose organosilicon compound c) R¹ is branched C₃-C₈-alkyl and R³ is C₁-C₆-alkyl.

3. A catalyst system as claimed in claim 1 or 2, in whose organosilicon compound c) R¹ is branched C₃-C₆-alkyl and R³ is C₁-C₄-alkyl.

4. A catalyst system as claimed in any of claims 1 to 3, in whose organosilicon compound c) R¹ is isobutyl or isopropyl.

5. A catalyst system as claimed in any of claims 1 to 4, wherein the titanium-containing solid component a) contains a finely divided carrier.

6. A catalyst system as claimed in any of claims 1 to 5, wherein a phthalic acid derivative of the formula (II) 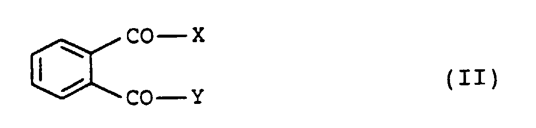 where X and Y are each chlorine or C₁-C₁₀-alkoxy or together form oxygen, is used as the electron donor component within the titanium-containing solid component a).

7. A catalyst system as claimed in any of claims 1 to 6, wherein a trialkylaluminum compound whose substituents are each of 1 to 8 carbon atoms is used as the aluminum component b).

8. A process for the preparation of polymers of C₂-C₁₀-alk-1-enes by polymerization at from 20 to 150°C and from 1 to 100 bar and during average residence times of the reaction mixture of from 1 to 10 hours with the aid of a Ziegler-Natta catalyst system, wherein a catalyst system as claimed in any of claims 1 to 7 is used for this purpose.

## Revendications

1. Systèmes catalyseurs du type des catalyseurs de Ziegler-Natta, contenant en tant que constituants actifs
a) un composant solide titanifère à la préparation duquel on a utilisé un dérivé du titane, un dérivé du magnésium, un agent halogénant et un composant donneur d'électrons,
b) un dérivé de l'aluminium et
c) en tant qu'autre composant donneur d'électrons, un dérivé organique du silicium répondant à la formule générale I
R¹R²Si(OR³)₂ (I)
dans laquelle
R¹ représente un groupe alkyle en C1-C10 ou cycloalkyle en C3-C8, à l'exclusion du groupe sec-butyle,
R² représente un groupe sec-butyle et
R³ représente un groupe alkyle en C1-C8.

2. Systèmes catalyseurs selon la revendication 1, pour lesquels, dans la formule du dérivé organique du silicium c), R¹ représente un groupe alkyle à chaîne ramifiée en C3-C8 et R³ un groupe alkyle en C1-C6.

3. Systèmes catalyseurs selon les revendications 1 ou 2, pour lesquels, dans la formule du dérivé organique du silicium c), R¹ représente un groupe alkyle à chaîne ramifiée en C3-C6 et R³ un groupe alkyle en C1-C4.

4. Systèmes catalyseurs selon les revendications 1 à 3, pour lesquels, dans la formule du dérivé organique du silicium c), R¹ représente un groupe isobutyle ou isopropyle.

5. Systèmes catalyseurs selon les revendications 1 à 4, dans lesquels le composant solide titanifère a) contient un support en fines particules.

6. Systèmes catalyseurs selon les revendications 1 à 5, pour lesquels le composant donneur d'électrons contenu dans le composant solide titanifère a) consiste en un dérivé de l'acide phtalique répondant à la formule générale II 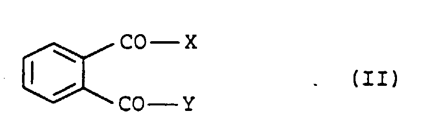 dans laquelle X et Y représentent chacun le chlore ou un groupe alcoxy en C1-C10 ou bien, ensemble, l'oxygène.

7. Systèmes catalyseurs selon les revendications 1 à 6, pour lesquels on a utilisé en tant que dérivé de l'aluminium b) un trialkylaluminium dont les substituants contiennent chacun 1 à 8 atomes de carbone.

8. Procédé de préparation de polymères d'alcènes-1 en C2-C10 par polymérisation à des températures de 20 à 150°C, des pressions de 1 à 100 bar et des durées de passage moyennes du mélange de réaction de 1 à 10 h à l'aide d'un système catalyseur Ziegler-Natta, caractérisé par le fait que l'on utilise un système catalyseur selon les revendications 1 à 7.
